# EUROPÄISCHE PATENTSCHRIFT

(11) **EP 0 936 450 B1**
(45) Veröffentlichungstag und Bekanntmachung des Hinweises auf die Patenterteilung: **11.04.2007**
(21) Anmeldenummer: 98810022.8
(22) Anmeldetag: 20.01.1998
(51) Int. Cl.: G01F 1/90

(54) **Anordnung zur Bestimmung des Massendurchflusses eines gasförmigen Mediums**
Device for determining the mass throughput of a gas
Dispositif pour la détermination de débit d'un gaz

(43) Veröffentlichungstag der Anmeldung: 18.08.1999
(73) Patentinhaber: GreenField AG, 4133 Pratteln (CH)
(72) Erfinder: Mutter, Heinz, 8400 Winterthur (CH)
(74) Vertreter: Sulzer Management AG

(56) Entgegenhaltungen:
- EP-A- 0 653 585
- GB-A- 1 345 974
- GB-A- 2 085 597
- GB-A- 2 102 995
- M. JAESCHKE, E.A.: "USING DENSITOMETERS IN GAS METERING" HYDROCARBON PROCESSING., Bd. 66, Nr. 6, Juni 1987, HOUSTON US, Seiten 37-41, XP002068746
- D.B. MANN: "CRYOGENIC FLOW-METERING RESEARCH AT NBS." CRYOGENICS, Bd. 11, Nr. 3, Juni 1971, Seiten 179-185, XP002068747

## Beschreibung

Die Erfindung betrifft eine Anordnung zur Bestimmung des Massendurchflusses eines gasförmigen Mediums.

Der Bestimmung des Massendurchflusses eines gasförmigen Mediums wie Erdgas und insbesondere komprimiertes Erdgas kommt bei Gasbetankungsanlagen eine wesentliche Bedeutung zu. Vor allem komprimiertes Erdgas gewinnt als alternativer Kraftstoff für Kraftfahrzeuge zunehmend an Bedeutung. Um mit Erdgas betriebenen Kraftfahrzeugen eine befriedigende Reichweite zu ermöglichen und gleichzeitig die Abmessungen des Gasvorratsbehälters im Kraftfahrzeug in vernünftigen Grenzen zu halten, werden diese Vorratsbehälter typischerweise bis auf Drücke von etwa 200 bar mit Erdgas befüllt. Hierzu sind Betankungsverfahren und -anlagen entwickelt worden, die ein sehr einfaches und rasches Betanken solcher Kraftfahrzeuge - vergleichbar mit dem Betanken von Benzin - ermöglichen. Ein derartiges Verfahren bzw. eine derartige Anlage ist beispielsweise in der EP-A-653 585 detailliert beschrieben.

Um an Erdgas-Tankstellen oder Zapfsäulen Erdgas in Kraftfahrzeuge abzufüllen und zu verkaufen, ist es notwendig, die abgefüllte Gasmenge genau zu bestimmen. Es herrscht allgemeine Übereinstimmung darüber, dass die Masse des Gases und nicht sein Volumen diejenige Grösse ist, die dem Kunden in Rechnung gestellt wird. Es ergibt sich somit die Notwendigkeit, den Massendurchfluss des komprimierten Erdgases hinreichend genau, das heisst mit höchstens ±1% bis ±2% Fehler, zu bestimmen. Dies ist aber insbesondere dann relativ aufwendig, wenn das Gas unter hohem Druck, beispielsweise im Bereich von etwa 100-300 bar, steht.

Zur Massendurchflussbestimmung in Gasbetankungsanlagen, wie beispielsweise Zapfsäulen, werden heute häufig Durchflussmessgeräte benutzt, die auf dem Coriolis-Prinzip basieren. Bei solchen Geräten werden eine oder mehrere Rohre, die von dem Gas durchströmt werden, in Schwingung versetzt. Dadurch wirkt auf das strömende Gas eine Corioliskraft, die zur Folge hat, dass sich die Schwingungen der Röhre oder Röhren in einer vom Massenstrom abhängigen Weise ändern. Die Coriolis-Messgeräte erlauben also eine direkte Messung des Massenstromes des Gases. Auf elektonischen Wege werden Impulse erzeugt, die proportional zur Masse des durchströmenden Gases sind und die dann beispielsweise einem Tanksäulen-Zählwerk zugeführt werden. Solche auf dem Coriolis-Prinzip basierende Messendurchflussmesser sind jedoch sehr aufwendige und auch kostenintensive Vorrichtungen, die zudem relativ empfindlich auf äussere Störeinflüsse reagieren. Sie stellen einen erheblichen Kostenfaktor für Gasbetankungsanlagen dar.

Aus der GB-A-2 085 597 ist eine Anordnung zum Bestimmen des Massendurchflusses bekannt, die eine Vorrichtung zum Bestimmen der Dichte umfasst sowie eine Vorrichtung zum Bestimmen des Volumendurchflusses.

Es ist daher eine Aufgabe der Erfindung, eine Anordnung zur Bestimmung des Massendurchflusses eines gasförmigen Mediums bereitzustellen die sehr einfach und kostengünstig ist und trotzdem eine genaue Bestimmung der durchströmenden Masse an gasförmigen Medium erlaubt.

Insbesondere soll die Anordnung auch für unter hohem Druck befindliche Gase geeignet sein.

Die diese Aufgabe lösende Anordnung zur Bestimmung des Massendurchflusses eines gasförmigen Mediums ist durch die Merkmale des unabhängigen Anspruchs 1 gekennzeichnet.

Erfindungsgemäss umfasst die Anordnung also eine Vorrichtung zum Bestimmen der Dichte des gasförmigen Mediums, eine Vorrichtung zum Bestimmen des Volumendurchflusses des gasförmigen Mediums sowie eine Verbindungsleitung zwischen diesen beiden Vorrichtungen.

Bei der erfindungsgemässen Anordnung erfolgt die Bestimmung des Massendurchflusses nicht durch eine direkte Messung, sondern in zwei Schritten: Zum einen wird die aktuelle Dichte oder die Betriebsdichte des gasförmigen strömenden Mediums bestimmt und zum anderen erfolgt eine volumetrische Durchflussmessung. Aus diesen beiden Grössen lässt sich der Massendurchfluss bestimmen.

Durch diese Massnahme ist die erfindungsgemässe Anordnung, insbesondere im Vergleich zu den auf dem Coriolis-Prinzip basierenden Messgeräten, besonders einfach und kostengünstig.

Die Bestimmung der Dichte des gasförmigen Mediums erfolgt durch Wägung eines genau bekannten Volumens, das von dem gasförmigen Medium durchströmt wird.

Die volumetrische Durchflussmessung erfolgt vorzugsweise mittels eines im Gasstrom angeordneten Rotors, der mehrere Schaufeln aufweist und ein magnetisches Material umfasst. Durch einen für Magnetfelder empfindlichen Wandler, z. B. einen Hall-Sensor, wird die Rotationsbewegung der Schaufeln in elektrische Signale umgesetzt, sodass die Drehzahl des Rotors und damit der Volumendurchfluss bestimmbar ist.

Die erfindungsgemässe Anordnung ist insbesondere für Gasbetankungsanlagen geeignet.

Weitere vorteilhafte Massnahmen und bevorzugte Ausgestaltungen ergeben sich aus den abhängigen Ansprüchen.

Im folgenden wird die Erfindung anhand eines Ausführungsbeispiels und anhand der Zeichnung näher erläutert. In der schematischen nicht massstäblichen Zeichnung zeigen:
- Fig. 1:: eine schematische Darstellung eines Ausführungsbeispiels der erfindungsgemässen Anordnung, und
- Fig.2:: eine Schnittdarstellung eines Ausführungsbeispiels der Vorrichtung zum Bestimmen des Volumendurchflusses.

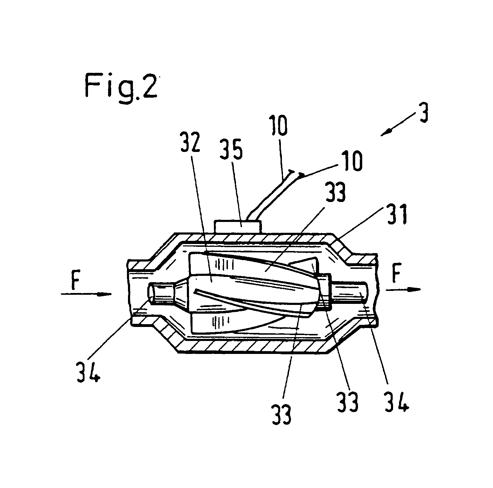

Bei der folgenden Beschreibung der Erfindung wird mit beispielhaftem Charakter auf die für die Praxis wichtige Anwendung Bezug genommen, dass die erfindungsgemässe Anordnung Teil einer Gasbetankungsanlage ist, wie sie in der bereits erwähnten EP-A-653 585 offenbart ist. Die erfindungsgemässe Anordnung ist dann z. B. die Komponente, die in den Fig. 2a, 2b und 2c der EP-A-653 585 mit dem Bezugszeichen 8 versehen ist und als "Massendurchflussmessvorrichtung" bezeichnet wird.

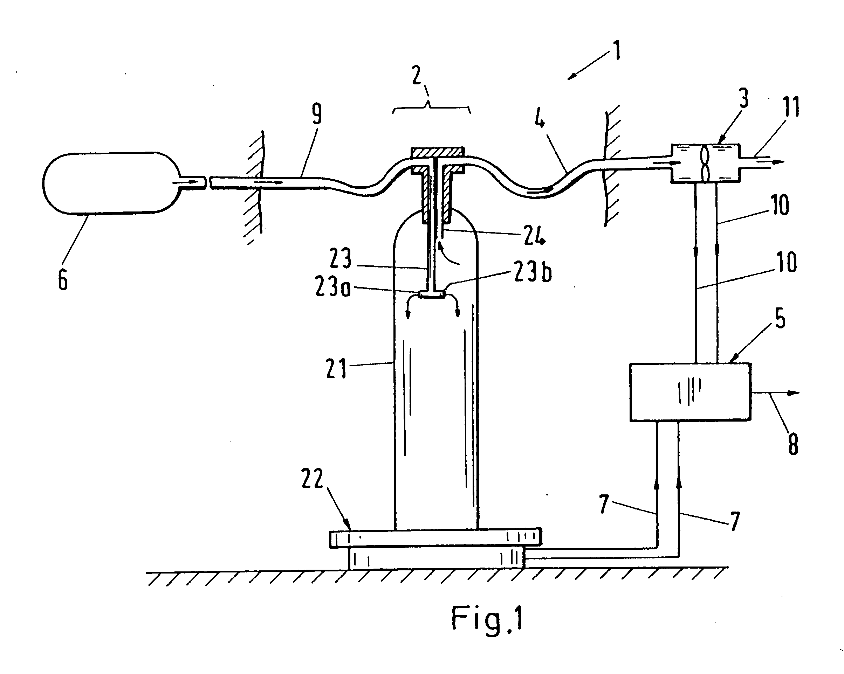

Fig. 1 zeigt in einer schematischen Darstellung ein Ausführungsbeispiel der erfindungsgemässen Anordnung zur Bestimmung des Massendurchflusses eines gasförmigen Mediums, die gesamthaft mit dem Bezugszeichen 1 bezeichnet ist. Die Anordnung 1 umfasst eine Vorrichtung 2 zum Bestimmen der Dichte des gasförmigen Mediums, eine Vorrichtung 3 zum Bestimmen des Volumendurchflusses des gasförmigen Mediums sowie eine Verbindungsleitung 4 zwischen diesen beiden Vorrichtungen 2,3.

Die Vorrichtung 2 zum Bestimmen der Dichte umfasst eine Wägeeinrichtung 22 sowie einen Behälter 21 mit konstantem und bekanntem Volumen. Der Behälter 21 weist einen Einlass 23 sowie einen Auslass 24 für das gasförmige Medium auf und ist derart angeordnet, dass sein aktuelles Gewicht, womit im Betriebszustand die Summe aus seinem Eigen- oder Leergewicht und dem Gewicht des im Innern des Behälters 21 befindlichen gasförmigen Mediums gemeint ist, mittels der Wägeeinrichtung 22 bestimmbar ist. Bei dem hier beschriebenen Ausführungsbeispiel ist die Wägeeinrichtung 22 als eine Plattform ausgestaltet, auf welcher der Behälter 21 steht, sodass er die Plattform mit seinem Gewicht beaufschlagt. In oder auf der Plattform 22 ist in an sich bekannter Weise mindestens ein Kraftsensor, wie beispielsweise ein Dehnmessstreifen oder eine Dehnmessstreifen-Brückenschaltung vorgesehen, um eine präzise Bestimung des aktuellen Gewichts des Behälters 21 zu ermöglichen. Die mittels der Wägeeinrichtung 22 bestimmten Messdaten werden über eine oder mehrere Signalleitungen 7 einer Auswerteeinheit 5 übermittelt, wo die Daten z. B. elektronisch weiterverarbeitet und ausgewertet werden.

Der Einlass 23 des Behälters 21 ist mit einer Zuführleitung 9 und der Auslass 24 mit einer Abführleitung 4 verbunden. Die Zuführleitung 9 führt beispielsweise zu einer Speichereinheit 6, in der das gasförmige Medium vorrätig ist. Im Anwendungsbeispiel der Gasbetankungsanlage ist die Speichereinheit 6 das Vorratsgefäss, aus dem das Gas beim Betanken des Kraftfahrzeuges in dessen Tank strömt, entspricht also der Speichereinheit, die in der EP-A-653 585 mit dem Bezugszeichen 3 versehen ist. Es versteht sich, dass bei solchen Anwendungen, bei denen das Gas unter Druck steht, die Leitungen 4,9 sowie der Behälter 21 druckfest ausgestaltet sind. Zudem sind diese Leitungen 4,9 flexibel ausgestaltet bzw. flexibel mit dem Einlass 23 bzw. dem Auslass 24 des Behälters 21 verbunden, sodass sie keine wesentliche Störung der Wägung des Behälters 21 verursachen. Bei dem hier beschriebenen Ausführungsbeispiel bildet die Abführleitung 4 die Verbindungsleitung, welche die beiden Vorrichtungen 2,3 miteinander verbindet.

Als Vorrichtung 3 zum Bestimmen des Volumendurchflusses sind prinzipiell alle an sich bekannten Volumendurchflussmesser geeignet. Im folgenden wird unter Bezugnahme auf Fig. 2 eine besonders bevorzugte Ausgestaltung beschrieben, bei der ein druckfestes unmagnetisches, insbesondere metallisches, Gehäuse 31 vorgesehen ist, in welchem ein Rotor 32 mit mehreren Schaufeln 33 angeordnet ist, der ein magnetisches Material umfasst. Die Vorrichtung 3 weist ferner einen für Magnetfelder empfindlichen Wandler, vorzugsweise einen Hall-Sensor 35, auf, der die Bewegung der Schaufeln 33 in elektrische Signale umsetzt, die über Signalleitungen 10 der Auswerteeinheit 5 (Fig. 1) zugeführt werden. Aus praktischen Gründen ist der Hall-Sensor 35 vorzugsweise an der Aussenseite des Gehäuses 31 angeordnet. Bei der in Fig. 2 dargestellten Ausführungsform ist der Rotor 32 als Axialturbine ausgestaltet. Es ist natürlich auch möglich, den Rotor 32 als Flügelradturbine auszubilden. Der Rotor 32 läuft in axialer Richtung beidseitig in eine Welle 34 aus. Die Wellen 34 werden jeweils durch ein nicht dargestelltes Zapfenlager gehalten. Der Rotor 32 wird durch das strömende gasförmige Medium, dessen Strömungsrichtung durch die Pfeile F angedeutet ist, in Rotation versetzt. Die Schaufeln 33 oder der gesamte Rotor 32 sind magnetisierbar oder weisen permanentmagnetische Eigenschaften auf. Der Rotor 32 mit den Schaufeln 33 kann beispielsweise aus einem Kunststoff gefertigt sein, wobei der Kunststoff eingelagerte und/oder an seiner Oberfläche vorgesehene magnetische Materialien, z. B. in Partikelform, aufweist. Zumindest die Schaufeln 33 des Rotors 32 müssen so ausgestaltet sein, dass sie (im Betriebszustand) permanent ein Magnetfeld erzeugen. Im Betriebszustand wird der Rotor 32 im Gehäuse 31 durch das strömende Medium in Rotation versetzt, wobei die Drehzahl des Rotors 32 im wesentlichen proportional zum Volumen des durchströmenden Gases ist. Rotiert der Rotor 32, so ist jeweils das Vorbeidrehen der Schaufeln 33 an dem Hall-Sensor 35 mittels diesem erfassbar, sodass die Drehzahl des Rotors 32 und damit der Volumendurchfluss des gasförmigen Mediums bestimmbar ist.

Durch die darstellungsgemäss (Fig. 2) linke Öffnung im Gehäuse 31 strömt das Gas im Betriebszustand in das Gehäuse 31. Diese Öffnung ist mittels der Verbindungsleitung 4 (Fig. 1) mit dem Auslass 24 des Behälters 21 verbunden. Durch die gemäss der Darstellung in Fig. 2 rechte Öffnung im Gehäuse 31 strömt das gasförmige Medium aus diesem heraus und gelangt beispielsweise über eine Druckleitung 11 (Fig. 1) zu dem zu betankenden Kraftfahrzeug.

Der Betriebszustand der Anordnung wird nun anhand des Anwendungsbeispiels erläutert, dass ein Kraftfahrzeug mit komprimierten Erdgas betankt wird. Das genaue Verfahren der Betankung kann beispielsweise so wie in der EP-A-653 585 beschrieben durchgeführt werden. Im folgenden wird daher nur auf die für die Massenbestimmung des abgegebenen Gases wesentlichen Aspekte eingegangen.

Das komprimierte Erdgas befindet sich unter einem Betriebsdruck von typischerweise mehr als 100 bar, beispielsweise zwischen 200 und 300 bar (bezogen auf eine Temperatur von 15°C), in der Speichereinheit 6. Die Komponenten der Anordnung 1, die von dem Erdgas durchströmt werden, z. B. der Behälter 21 und die Leitungen 9,4 und 11 sind derart ausgestaltet, dass sie diesem Betriebsdruck standhalten. Bei der Betankung strömt das komprimierte Gas, wie dies in Fig. 1 die Pfeile ohne Bezugszeichen symbolisch andeuten, aus der Speichereinheit 6 durch die Zuführleitung 9, durch den Behälter 21, der beispielsweise als Druckflasche ausgestaltet ist, durch die Verbindungsleitung 4, durch die Vorrichtung 3 zum Bestimmen des Volumendurchflusses und durch die Druckleitung 11 in den Vorratsbehälter des zu betankenden Kraftfahrzeuges. Da der von dem Gas durchströmte Behälter 21 ein konstantes und genau bekanntes Volumen aufweist, befindet sich während des Betankungsvorgangs in seinem Innern immer das gleiche Volumen an Gas. Mittels der Wägeeinrichtung 22 wird das aktuelle Gewicht des Behälters 21 - also sein Eigengewicht und das Gewicht des momentan in ihm befindlichen Gases - kontinuierlich bestimmt. Da das Volumen der in dem Behälter befindlichen Gasmenge konstant und bekannt ist, lässt sich aus der Wägung unter Berücksichtigung des ebenfalls bekannten Eigengewichts des Behälters 21 in sehr einfacher Weise die momentane Dichte oder Betriebsdichte des strömenden Gases bestimmen. Durch die flexible Ausgestaltung der Zu- und der Abführleitung 9, 4 bzw- durch ihre flexible Verbindung mit dem Behälter 21 ist gewährleistet, dass diese Leitungen 4,9 die Wägung praktisch nicht störend beeinflussen.

Nach Durchströmen des Behälters 21 strömt das Gas im wesentlichen mit demselben Druck und derselben Temperatur durch das Gehäuse 31 der Vorrichtung 3 und versetzt dadurch den Rotor 32 in Rotation. Mittels des HallSensors 35 wird die Drehzahl des Rotors 32 bestimmt, aus der sich der Volumendurchfluss des Erdgases bestimmen lässt. In der Auswerteeinheit 5 wird dann aus der aktuellen Dichte des Erdgases und dem Volumendurchfluss der Massendurchfluss berechnet und beispielsweise als Signal über eine Signalleitung 8 einer Anzeigevorrichtung der Gasbetankungsanlage zugeführt.

Vorzugsweise umfasst die Auswerteeinheit 5, die sowohl von der Vorrichtung 2 zum Bestimmen der Dichte als auch von der Vorrichtung 3 zum Bestimmen des Volumendurchflusses Signale empfängt, elektronische Mittel zum Multiplizieren des aktuellen Dichtesignals mit dem Volumendurchflusssignal, um so das Signal für den Massendurchfluss zu bestimmen.

Die beiden Vorrichtungen 2 und 3 sowie die Verbindungsleitung 4 sind derart ausgestaltet und relativ zueinander angeordnet, dass zwischen dem Einlass des Behälters 21 und dem Ausgang des Gehäuses 31 der Vorrichtung 3 kein wesentlicher Druckgradient und kein wesentlicher Temperaturgradient herrscht, sodass das Erdgas die beiden Vorrichtungen 2 und 3 im wesentlichen unter dem gleichen Druck und bei der gleichen Temperatur durchströmt.

Bevorzugt sind der Einlass 23 und/oder der Auslass 24 des Behälters 21 derart ausgestaltet, dass der durch das strömende gasförmige Medium verursachte Rückstoss effekt minimal ist. Dazu ist beispielsweise, wie in Fig. 1 dargestellt, der Einlass 23 so ausgestaltet, dass er sich zunächst als Röhre in das Innere des Behälters 21 erstreckt und dort ein T-förmiges Ende mit zwei Einlassöffnungen 23a und 23b aufweist. Die beiden Einlassöffnungen sind also derart angeordnet, dass das durch die eine Einlassöffnung 23a strömende Gas im wesentlichen in die entgegengesetzte Richtung strömt wie das durch die andere Einlassöffnung 23b strömende Gas. Durch diese Massnahme lässt sich der durch das einströmende Gas bewirkte Rückstosseffekt zumindest deutlich reduzieren, was sich positiv auf die Genauigkeit der Wägung auswirkt.

Um die Genauigkeit der Massendurchflussbestimmung, insbesondere die der Wägung noch zu erhöhern, ist es vorteilhaft, wenn der Behälter 21 ein Verhältnis von Eigengewicht und Volumen aufweist, das kleiner als 1 kg/l, insbesondere kleiner als 0.5 kg/l, ist. Solche Behälter 21, die diese Bedingung erfüllen und zudem für die oben erwähnten hohen Betriebsdrücke, z. B. bis 300 bar, geeignet sind, sind vom Stand der Technik her bekannt, beispielsweise als sogenannte Kompositflaschen. Dies sind Druckflaschen, die eine dünne Aluminiumflasche (sogenannter Liner) aufweisen, welche von hochfesten Fasern, z. B. Kohlefasern, umgeben ist, wobei diese Fasern in einem Epoxydharz vergossen sind. Solche Flaschen werden typischerweise als Atemluftflaschen eingesetzt. Ihr Verhältnis von Eigengewicht zu Volumen ist besondes klein, beispielsweise 0.3 kg/l.

Es sind zahlreiche Varianten des beschriebenen Ausführungsbeispiels möglich, von denen hier nur zwei in nicht abschliessender Aufzählung erwähnt werden.

So kann beispielsweise die relative Anordnung der beiden Vorrichtungen 2 und 3 zueinander in Strömungsrichtung des gasförmigen Mediums vertauscht werden, sodass das gasförmige Medium zuerst die Vorrichtung 3 zum Bestimmen des Volumendurchflusses und dann die Vorrichtung 2 zum Bestimmen der Dichte durchströmt.

Auch kann die Vorrichtung 2 zum Bestimmen der Dichte in sinngemäss gleicher Weise nach dem Prinzip einer Biegebalken- oder Balkenwaage ausgestaltet sein, wobei der Behälter 21 dann an der Waage hängt.

Im Hinblick auf eine möglichst hohe Genauigkeit der Wägung ist es vorteilhaft, wenn der Behälter 21 möglichst freistehend bzw. freihängend und möglichst reibungsfrei angeordnet ist.

Durch die Erfindung wird eine besonders einfache und kostengünstige Anordnung vorgeschlagen, mit der sich in einfacher Weise der Massendurchfluss eines gasförmigen Mediums, insbesondere eines unter hohem Druck strömenden gasförmigen Mediums, sehr genau und zuverlässig ermitteln lässt. Diese Anordnung ist insbesondere für Gasbetankungsanlagen und speziell solche für die Abgabe von komprimiertem Erdgas, z. B. im Druckbereich von 200-300 bar (bezogen auf 15°C), geeignet.

## Patentansprüche

1. Anordnung zur Bestimmung des Massendurchflusses eines gasförmigen Mediums in einer Gasbetankungsanlage mit einer Vorrichtung (2) zum Bestimmen der Dichte den gasförmigen Mediums, mit einer Vorrichtung (3) zum Bestimmen des Volumendurchflusses des gasförmigen Mediums, und mit einer Verbindungsleitung (4) für das gasförmige Medium zwischen diesen beiden Vorrichtungen (2, 3), **dadurch gekennzeichnet, dass** die Vorrichtung (2)zum Bestimmen der Dichte eine Wägeeinrichtung (22) umfasst, sowie einen Behälter (21) mit konstantem Volumen, der einen Einlass (23) und einen Auslass (24) für das gasförmige Medium aufweist, wobei der Behälter (21) derart angeordnet ist, dass sein aktuelles Gewicht inklusive des im Innern des Behältern (21) befindlichen gasförmigen Mediums - mittels der Wägeeinrichtung (22) bestimmbar ist.

2. Anordnung nach Anspruch 1, bei welcher der Einlass (23) des Behälters (21) mit einer Zuführleitung (9) und der Auslass (24) mit einer Abführleitung (4) verbunden ist, wobei beide Leitungen (4,9) flexible und druckfest ausgestaltet sind, und wobei eine der beiden Leitungen die Verbindungsleitung (1) bildet.

3. Anordnung nach einem der vorangehenden Ansprüche, wobei der Behälter (21) ein Verhältnis aus Eigengewicht und Volumen aufweist, dies kleiner als 1 kg/l, insbesondere kleiner als 0.5 kg/l, ist.

4. Anordnung nach einem der vorangehenden Ansprüche, wobei der Einlass (23) und/oder der Auslass (24) des Behälters derart ausgestaltet sind, dass der durch das strömende gasförmige Medium verursachte Rückstosseffekt minimal ist.

5. Anordnung nach einem der vorangehenden Ansprüche wobei die Vorrichtung (3) zum Bestimmen des Volumendurchflusses ein druckfestes unmagnetisches, insbesondere metallisches, Gehäuse (31) aufweist, in welchem ein Rotor (32) mit mehreren Schaufeln (33) angeordnet ist,der ein magnetisches Material umfasst, und wobei die Vorrichtung (3) ferner einen für Magnetfelder empfindlichen Wandler (35) aufweist, der die Bewegung der Schaufeln (33) in elektrische Signale umsetzt.

6. Anordnung nach Anspruch 5, wobei der Wandler (35) an der Aussenseite des Gehäuses (31) angeordnet ist.

7. Anordnung nach Anspruch 5 oder 6 wobei der Wandler als Hall-Sensor (35) ausgestaltet ist.

8. Anordnung nach einem der vorangehenden Ansprüche, die für einen Betriebsdruck von über 100 bar, insbesondere 200 bis 300 bar, ausgestaltet ist.

9. Anordnung nach einem der vorangehenden Ansprüche, mit einer Auswerteeinheit (5), die sowohl 1 von der Vorrichtung (2) zum Bestimmen der Dichte als auch von der Vorrichtung (3) zum Bestimmen des Volumendurchflusses Signale empfängt, wobei die Auswerteeinheit (5) elektronische Mittel zum Multiplizieren des aktuellenDichtesignals mit dem Volumendurchflusssignal umfasst, um so ein Signal für den Massendurchfluss zu bestimmen.

10. Gasbetankungsanlage mit einer Anordnung gemäss einem der vorangehenden Ansprüche.

## Claims

1. An arrangement for the determination of the mass through-flow of a gaseous medium in a gas filling installation having an apparatus (2) for the determination of the density of the gaseous medium, an apparatus (3) for the determination of the volumetric through-flow of the gaseous medium, and a connection line (4) between these two apparatuses (2, 3), **characterised in that** the apparatus (2) for the determination of the density includes a weighing device (22) and a container (21) with a constant volume which has an inlet (23) and an outlet (24) for the gaseous medium, with the container (21) being arranged in such a manner that its current weight - inclusive of the gaseous medium located in the interior of the container (21) - can be determined by means of the weighing device (22).

2. An arrangement in accordance with claim 1, in which the inlet (23) of the container (21) is connected to a supply line (9) and the outlet (24) to a flow-off line (4), with both lines (4, 9) being designed flexibly and resistant to pressure, and with one of the two lines forming the connection line (4).

3. An arrangement in accordance with one of the preceding claims, with the container (21) having a ratio of its own weight to its volume which is less than 1 kg/l, in particular less than 0.5 kg/l.

4. An arrangement in accordance with one of the preceding claims, with the inlet (23) and/or the outlet (24) of the container being designed in such a manner that the recoil effect caused by the flowing gaseous medium is a minimum.

5. An arrangement in accordance with any one of the preceding claims, with the apparatus (3) for the determination of the volumetric through-flow having a pressure resistant, non-magnetic, in particular a metallic, housing (31) in which a rotor (32) with a plurality of blades (33) which includes a magnetic material is arranged, and with the apparatus (3) further including a transducer (35) which is sensitive to magnetic fields and which converts the movement of the blades (33) into electric signals.

6. An arrangement in accordance with claim 5, with the transducer (35) being arranged at the outside of the housing (31).

7. An arrangement in accordance with claim 5 or claim 6, with the transducer being executed as a Hall sensor (35).

8. An arrangement in accordance with any one of the preceding claims which is designed for an operating pressure of over 100 bar, in particular of 200 to 300 bar.

9. An arrangement in accordance with any one of the preceding claims including an evaluation unit (5) which receives signals both from the apparatus (2) for the determination of the density as well as from the apparatus (3) for the determination of the volumetric through-flow, with the evaluation unit (5) including electronic means for the multiplication of the current density signal by the volumetric through-flow signal in order thus to determine a signal for the mass through-flow.

10. A gas filling station with an arrangement in accordance with any one of the preceding claims.

## Revendications

1. Dispositif pour la détermination du débit masse d'une substance gazeuse dans une installation de ravitaillement de gaz ayant un mécanisme (2) pour la détermination de la densité de la substance gazeuse, ayant un mécanisme (3) pour la détermination du débit volumique de la substance gazeuse, et ayant une conduite de raccordement (4) pour la substance gazeuse entre ces deux mécanismes (2, 3),
**caractérisé en ce que** le mécanisme (2) pour la détermination de la densité comprend un système de pesage (22), ainsi qu'un conteneur (21) d'un volume constant qui présente une entrée (23) et une sortie (24) pour la substance gazeuse, le conteneur (21) étant agencé de telle sorte que son poids réel - y compris la substance gazeuse présente à l'intérieur du conteneur (21) - peut être déterminé au moyen du système de pesage (22).

2. Dispositif selon la revendication 1, dans lequel l'entrée (23) du conteneur (21) est reliée à une conduite d'amenée (9) et la sortie (24) à une conduite d'évacuation (4), les deux conduites (4, 9) étant conçues de façon flexible et résistante à la pression et l'une des deux conduites constituant la conduite de raccordement (4).

3. Dispositif selon l'une des revendications précédentes,
dans lequel le conteneur (21) présente un rapport entre son poids propre et son volume qui est inférieur à 1 kg/1, en particulier inférieur à 0,5 kg/1.

4. Dispositif selon l'une des revendications précédentes,
dans lequel l'entrée (23) et/ou la sortie (24) du conteneur est (sont) conçue(s) de telle sorte que l'effet de répulsion provoqué par la substance gazeuse en circulation est minimal.

5. Dispositif selon l'une des revendications précédentes,
dans lequel le mécanisme (3) pour la détermination du débit volumique présente un logement résistant à la pression non magnétique, en particulier métallique (31) dans lequel est agencé un rotor (32) ayant plusieurs pales (33) qui comprend un matériau magnétique, et dans lequel le mécanisme (3) présente en outre un convertisseur sensible aux champs magnétiques (35) qui transforme le mouvement des pales (33) en signaux électriques.

6. Dispositif selon l'une des revendications précédentes,
dans lequel le convertisseur (35) est agencé sur le côté extérieur du logement (31).

7. Dispositif selon la revendication 5 ou 6, dans lequel le convertisseur est réalisé comme capteur de Hall (35).

8. Dispositif selon l'une des revendications précédentes, qui est conçu pour une pression de service supérieure à 100 bars, en particulier de 200 à 300 bars.

9. Dispositif selon l'une des revendications précédentes, ayant une unité d'analyse (5) qui reçoit des signaux à la fois du mécanisme (2) pour la détermination de la densité et du mécanisme (3) pour la détermination du débit volumique, l'unité d'analyse (5) comprenant des moyens électroniques pour multiplier le signal de la densité réelle par le signal du débit volumique afin de déterminer ainsi un signal pour le débit masse.

10. Installation de ravitaillement de gaz ayant un dispositif selon l'une des revendications précédentes.
